# EUROPÄISCHE PATENTSCHRIFT

(11) **EP 2 982 487 B1**
(45) Veröffentlichungstag und Bekanntmachung des Hinweises auf die Patenterteilung: **17.01.2018**
(21) Anmeldenummer: 15180595.9
(22) Anmeldetag: 28.02.2011
(51) Int. Cl.: B29C 31/00, B65B 59/04

(54) **VORRICHTUNG ZUM WECHSEL DES OBER- UND UNTERWERKZEUGS EINER VERPACKUNGSMASCHINE**
DEVICE FOR CHANGING THE UPPER AND LOWER TOOL OF A PACKAGING MACHINE
APPAREIL DE CHANGEMENT DE L'OUTIL INFERIEUR ET SUPERIEUR D'UNE MACHINE D'EMBALLAGE

(30) Priorität: 26.02.2010 DE 102010009536
(43) Veröffentlichungstag der Anmeldung: 10.02.2016
(62) Teilanmeldung aus: 11711443.9
(73) Patentinhaber: GEA Food Solutions Germany GmbH, 35216 Biedenkopf-Wallau (DE)
(72) Erfinder: SCHMEISER, Jörg, 87487 Wiggensbach (DE); HÜBNER, Gerd Martin, 57234 Wilnsdorf (DE); MEYER, Klaus, 35236 Breidenbach-Wiesenbach (DE); NIESAR, Jürgen, 57334 Bad Laasphe (DE); RUNTE, Frank, 57334 Bad Laasphe (DE)
(74) Vertreter: Wolff, Felix

(56) Entgegenhaltungen:
- EP-A1- 2 052 979
- DE-U1- 9 107 173
- GB-A- 2 250 946

## Beschreibung

Die vorliegende Erfindung betrifft ein Verfahren zum Wechseln des Ober- und Unterwerkzeugs einer Verpackungsmaschine. Desweiteren betrifft die vorliegende Erfindung eine Verpackungsmaschine.

Verpackungsmaschinen, wie sie beispielsweise in der EP 2 052 979 A1 bekannt sind, werden heutzutage eingesetzt, um Verpackungsgüter, insbesondere Lebensmittel, in eine Verpackungsfolie einzupacken. Diese Verpackungen bestehen in der Regel aus einem Unterteil und einem Oberteil, wobei das Unterteil aus einer Unterfolie und das Oberteil aus einer die Oberfolie hergestellt werden, beispielsweise in einer in passender Form tiefgezogenen Ausformung/Mulde. Das Verpackungsgut befindet sich zwischen der Ober- und der Unterfolie. Nachdem das Verpackungsgut zwischen den beiden Folien angeordnet worden ist, werden diese miteinander versiegelt. Die Folien werden vorzugsweise taktweise entlang der Verpackungsmaschine, mit ihren Funktions-Arbeits-Stationen, transportiert und bei einem Takt werden in der Regel mehrere Verpackungen, ein sogenanntes Format, gleichzeitig hergestellt. Zum Tiefziehen bzw. Siegeln der Folienbahnen werden Werkzeuge benötigt, die in der Regel aus einem Unter- und einem Oberwerkzeug bestehen. Diese Werkzeuge sind für die jeweils herzustellende Verpackung bzw. das jeweils herzustellende Format individualisiert, so dass diese bei einem Verpackungs- bzw. Formatwechsel ausgetauscht werden müssen.

Derartige Werkzeugwechselsysteme werden beispielsweise in der EP 1 234 765 B1 sowie in der EP 2 110 219 A1 sowie in der US 5,940,953 offenbart.

Die dort beschriebenen Werkzeugwechselsysteme sind jedoch vergleichsweise aufwendig bzw. ermöglichen keinen Werkzeugwechsel in ergonomisch günstiger Höhe.

Es war deshalb die Aufgabe der vorliegenden Erfindung, eine Verpackungsmaschine zur Verfügung zu stellen, die die Nachteile des Standes der Technik nicht aufweisen.

Gelöst wird die Aufgabe mit einer Verpackungsmaschine gemäß Anspruch 1.

Die vorliegende Erfindung betrifft eine Verpackungsmaschine mit einem Oberwerkzeug und/oder gegebenenfalls einem Unterwerkzeug. Bei diesen Werkzeugen handelt es sich um die Werkzeuge einer Tiefziehstation und/oder einer Siegelstation. Die Werkzeuge können aus mehreren Teilen bestehen, die relativ zueinander verschiebbar in der Verpackungsmaschine vorgesehen sein können.

Vorzugsweise werden mindestens ein, vorzugsweise die beiden Werkzeuge nun für den Werkzeugwechsel beispielsweise von einer Hubeinrichtung über eine Störkante der Verpackungsmaschine angehoben.

Eine Störkante im Sinne der vorliegenden Erfindung ist eine Höhe, insbesondere oberhalb des Maschinenrahmens, in der ein oder beide Werkzeuge für einen Bediener oder für eine Vorrichtung, beispielsweise einen Roboter und/oder ein Transportmittel, frei verfügbar sind, so dass es/sie aus der Verpackungsmaschine herausgenommen werden können. Das neue Werkzeug wird auch oberhalb dieser Störkante in einen Bereich oberhalb der Verpackungsmaschine verbracht und dann in die Verpackungsmaschine abgesenkt. Die Störkante kann mit der Oberkante des Maschinenrahmens zusammenfallen, liegt jedoch vorzugsweise oberhalb der Oberkante des Maschinenrahmens, insbesondere in einer für den Arbeiter vor Ort ergonomisch günstigen Höhe.

Das Unter- und das Oberwerkzeug der Tiefzieh- bzw. der Siegelstation können gemeinsam oder einzeln gewechselt werden.

Insbesondere wird das jeweilige Werkzeug in einer ergonomisch günstigen Höhe übergeben, so dass die jeweilige Person, die das jeweilige Werkzeug wechselt, dieses, zumindest nicht mehr nennenswert, anheben und/oder absenken, sondern nur noch seitlich verschieben bzw. entnehmen muss.

Vorzugsweise werden die Werkzeuge, insbesondere einer Arbeitsstation, d.h. der Form- oder der Siegelstation, zumindest abschnittsweise gemeinsam, insbesondere mit einem gemeinsamen Antrieb, angehoben oder abgesenkt, wobei natürlicherweise das Oberwerkzeug um eine geringere Wegstrecke angehoben bzw. abgesenkt werden muss als das Unterwerkzeug. Diese bevorzugte Ausführungsform der vorliegenden Erfindung hat den Vorteil, dass lediglich ein Antrieb für beide Werkzeuge beim Werkzeugwechsel benötigt wird. Es sind aber auch mehrere, z.B. zwei oder vier Einzelantriebe je Arbeitsstation möglich, die vorzugsweise elektrisch/elektronisch und/oder mechanisch miteinander gekoppelt sein können.

Die Werkzeuge der Formstation werden vorzugsweise getrennt von den Werkzeugen der Siegelstation gewechselt.

Vorzugsweise werden die oder das Werkzeug(e) senkrecht angehoben bzw. abgesenkt.

Zum Wechseln eines Werkzeuges kann es nötig sein, dass es seitlich verschoben werden muss. Vorzugsweise erfolgt diese seitliche Bewegung in oder gegen die Laufrichtung der Folienbahn. Besonders bevorzugt wird das Werkzeug um mindestens eine Formatlänge (Vorschub der Folienbahn bei einem Takt, auch als Taktlänge bezeichnet), d.h. die Länge, um die die Folie bei einem Takt weitertransportiert wird, seitlich verschoben.

In einer bevorzugten Ausführungsform des erfindungsgemäßen Verfahrens, sind das Unterwerkzeug an einem Hubtisch und das Oberwerkzeug an einem tragenden Oberteil angeordnet. Vorzugsweise wird mindestens ein Werkzeug mit dem Hubtisch bzw. mit dem tragenden Oberteil vor und nach dem Werkzeugwechsel automatisch ent- und/oder verriegelt. Automatisch ent-/verriegelt im Sinne der Erfindung bedeutet, dass eine, vorzugsweise mechanische, Verriegelung, ein Energie-, Vakuum-, Druckluft-, Kühlwasser-, Reinigungsfluid- und/oder Schutzgasanschluss automatisch, d.h. ohne menschliches Zutun, erfolgt. Zusätzliche Montagewerkzeuge sind hiernach für den Werkzeugwechsel nicht erforderlich.

Folienbahn im Sinne der Erfindung bedeutet, dass sie zumindest teilweise aus Kunststoff besteht, aber auch einen Papieranteil oder dergleichen aufweisen kann.

Vorzugsweise wird in der Verpackungsmaschine zumindest eine Folienbahn, insbesondere die Unterfolienbahn, entlang einer Folientransportebene transportiert. Dieser Transport kann kontinuierlich erfolgen. Vorzugsweise erfolgt der Transport jedoch taktweise, wobei die Folienbahn bei jedem Takt um eine Formatlänge weitertransportiert wird. Vorzugsweise handelt es sich bei der Folienbahn um die Unterfolie oder um die Oberfolie. Gemäß einer bevorzugten Ausführungsform wird diese Folienbahn für den Werkzeugwechsel aufgeschnitten, wobei ganz besonders bevorzugt eine Formatlänge aus der Folienbahn oder den Folienbahnen herausgeschnitten wird, so dass das Unterwerkzeug durch diesen Ausschnitt über die Störkante gehoben werden kann. Vorzugsweise erfolgt der Ausschnitt der Folienbahn oder der Folienbahnen so, dass zumindest ein Rand, vorzugsweise beide Ränder der Folienbahn, die von einem Transportmittel, insbesondere zwei Transportketten, die rechts und links von der Folienbahn angeordnet sind, ergriffen ist, stehen gelassen wird/werden, so dass die Folienbahn(en) nach dem Werkzeugwechsel weiter transportiert werden kann/können. Unter den Rändern der Folienbahn versteht der Fachmann den Bereich der Folie, der jeweils rechts und links über das Format hinaussteht. In der Regel wird dieser Bereich jeweils von einer Transportkette ergriffen.

Erfindungsgemäß weist die Verpackungsmaschine ein tragendes Oberteil auf, mit dem das zu wechselnde Oberwerkzeug verbunden wird. Vorzugsweise ist dieses tragende Oberteil für den Werkzeugwechsel von dem zu wechselnden Werkzeug wegbewegbar, insbesondere wegschwenkbar, wegdrehbar, wegschiebbar und/oder zumindest abschnittsweise translatorisch bewegbar, vorgesehen. Diese bevorzugte Ausführungsform der vorliegenden Erfindung hat den Vorteil, dass durch diese Wegbewegung das zu wechselnde Oberwerkzeug frei von oben zugänglich ist. Diese Wegbewegung des Werkzeuges kann gemäß einer weiteren bevorzugten oder erfindungsgemäßen Ausführungsform der vorliegenden Erfindung auch für eine Werkzeuginspektion und/oder eine Werkzeugreinigung eingesetzt werden.
Gemäß einer anderen bevorzugten Ausführungsform der vorliegenden Erfindung werden bei einem Wechsel des Vorschubs der Folienbahn bei einem Takt (Taktlänge) nur die Werkzeuge gewechselt. Die Position der Form- und/oder Siegelstation innerhalb der Verpackungsmaschine bleibt vorzugsweise unverändert kann aber noch zusätzlich angepasst werden. Dabei werden die Werkzeuge in ihrer Grundstruktur vorzugsweise auf eine große Vorschublänge ausgelegt und, bei kleineren Formaten, lediglich der Wirkbereich der Werkzeuge, der im Eingriff mit der jeweiligen Folienbahn steht, reduziert.

Gemäß einer anderen bevorzugten Ausführungsform der vorliegenden Erfindung wird bei einem Wechsel des Vorschubs der Folienbahn bei einem Takt (Taktlänge) die Gesamtlänge des Werkzeuges an den jeweilig gewünschten Vorschub angepasst. In diesem Fall muss neben dem Werkzeug selbst auch die Grundplatte, die das Werkzeug mit dem Hubsystem verbindet, ausgetauscht werden. Vorzugsweise wird dabei die Grundplatte ebenfalls über die Störkante gehoben, und/oder nach dem Werkzeugwechsel zumindest abschnittsweise wieder unter die Störkante abgesenkt und/oder es wird die Grundplatte vor und nach dem Werkzeugwechsel automatisch ent- und/oder verriegelt.

Vorzugsweise wird bei einem Werkzeugwechsel auch die Position der jeweiligen Arbeitsstation innerhalb der Verpackungsmaschine angepasst. Dies kann vor, bei oder nach dem Werkzeugwechsel erfolgen. Die Position der jeweiligen Arbeitsstation (z.B. Form-, Füll-, Siegel- und/oder Vereinzelungsstation) kann dabei beispielsweise an einen veränderten Vorschub der Folienbahn je Takt angepasst werden. Die Arbeitsstationen werden bei einer Veränderung ihrer Position vorzugsweise entlang des Rahmens der Verpackungsmaschine verschoben und dann in ihrer neuen Position arretiert. Das Verschieben kann manuell oder motorisch, insbesondere automatisch erfolgen, insbesondere anhand einer am Werkzeug vorhandenen Kennung.

In einer weiteren bevorzugten Ausführungsform ist das jeweilige Werkzeug mit einem Identifizierungsmittel/Kennung, beispielsweise mit RFID, identifizierbar. Diese bevorzugte Ausführungsform hat beispielsweise den Vorteil, dass die Verpackungsmaschine, nachdem das jeweilige Werkzeug identifiziert worden ist, automatisch an das jeweilige Werkzeug anpassbar ist. Beispielsweise kann mittels der Identifizierung festgelegt werden, welche Anschlüsse (Energie, Druckluft, Inertgas etc.) vorgesehen werden müssen. Desweiteren kann die Bewegung des Werkzeuges, d.h. insbesondere die Bewegung des Hubtisches, an das jeweilige Werkzeug angepasst werden, um zu vermeiden, dass die Verpackungsmaschine durch einen zu großen Hub beschädigt wird oder dass der Werkzeughub zu gering ist. Zusätzlich kann anhand der Kennung festgelegt werden wie der Werkzeugwechsel erfolgen soll, beispielsweise auf welche Höhe das jeweilige Werkzeug gehoben werden soll. Auch ein Transportmittel, das das Werkzeug nach dem Wechsel übernimmt, kann anhand der Kennung automatisch gesteuert werden. Außerdem kann mit dem Identifizierungsmittel verhindert werden, dass ein falsches, nicht für die jeweilige Verpackungsmaschine vorgesehenes Werkzeug, eingesetzt wird. In diesem Fall wird eine in der Verpackungsmaschine vorgesehene Steuerung vorzugsweise verhindern, dass die Verpackungsmaschine in Betrieb gesetzt werden kann. Dasselbe gilt vorzugsweise, wenn die Steuerung erkennt, dass nicht aufeinander abgestimmte Werkzeuge in einer der Arbeitsstationen, vorzugsweise in der Tiefzieh- und/oder Siegelstation, eingespannt sind.

Alle zu den erfindungsgemäßen gemachten Ausführungen gelten für die erfindungsgemäßen Verpackungsmaschinen gleichermaßen und umgekehrt.

Die vorliegende Erfindung betritt eine Verpackungsmaschine mit einer Tiefzieh-, Füll- und Siegelstation, wobei die Tiefzieh- und Siegelstation jeweils ein Oberwerkzeug mit einem tragenden Oberteil aufweisen, wobei mindestens ein tragendes Oberteil schwenkbar vorsehen ist und der Schwenkmechanismus von dem tragenden Oberteil lösbar ist.

Noch ein bevorzugter Gegenstand der vorliegenden Erfindung ist eine Verpackungsmaschine, bei der die Tiefzieh- und/oder Siegelstation jeweils eine Hubeinrichtung aufweisen, wobei diese Hubeinrichtung auch zum Anheben und Absenken des Unter- und/oder Oberwerkzeuges über bzw. unter die Störkante eingesetzt wird.

Noch ein weiterer bevorzugter Gegenstand der vorliegenden Erfindung ist eine Verpackungsmaschine, die höhenverstellbare, vorzugsweise teleskopierbare, Führungsschienen für ein oder mehrere Werkzeuge aufweist. Diese Führungsschienen können für den Werkzeugwechsel eingesetzt werden, um das jeweilige Werkzeug von einer Parkstellung in die Nutzstellung zu überführen und umgekehrt. Vorzugsweise handelt es sich bei diesen Führungsschienen nicht um eine durchgehende Ebene, sondern um Schienen, die rechts und links des jeweiligen Werkzeugs vorgesehen sind.

Gemäß eines weiteren bevorzugten Gegenstandes der vorliegenden Erfindung weist die Verpackungsmaschine eine Produktunterstützung auf, die höhenverstellbar vorgesehen ist und/oder Teil einer Hubeinrichtung für den Werkzeugwechsel ist. Derartige Produktunterstützungen sind Mittel, die parallel zu der Transportrichtung der Folienbahn vorgesehen sind und die zwischen jeweils zwei Verpackungen angeordnet sind und die verhindern, dass die Folienbahn quer zu ihrer Transportrichtung zu sehr durchhängt. Derartige Produktunterstützungen werden insbesondere benötigt, nachdem die jeweilige Verpackung mit dem Verpackungsgut befüllt worden ist.

Gemäß noch einem bevorzugten Gegenstand der vorliegenden Erfindung weist die Verpackungsmaschine mehrere Form- oder Siegelstationen aufweist, wobei die Formstationen und/oder Siegelstationen vorzugsweise jeweils unterschiedliche Werkzeuge aufweisen. Beispielsweise weisen sie zwei Form- und zwei Siegelstationen auf, die jeweils Werkzeuge für unterschiedliche Vorzüge, beispielsweise 370 mm und 400 mm aufweisen. Diese Werkzeuge können dann beispielsweise wahlweise, gleichzeitig oder getrennt, eingesetzt werden, ohne dass ein Werkzeugwechsel erfolgen muss. Wenn die Werkzeuge hingegen gewechselt werden, so werden vorzugsweise die einzusetzenden Werkzeuge jeweils in die Station mit dem korrespondierenden Vorzug eingesetzt, also beispielsweise Werkzeuge mit 370 mm Vorzug in die für 370 mm Vorzug eingerichtete Station.

Ein weiterer bevorzugter Gegenstand der vorliegenden Erfindung ist eine Verpackungsmaschine, die ein Mittel aufweist, das in Eingriff mit einem korrespondierenden Mittel an einem Transportmittel bringbar ist, und das die Lage des Transportmittels relativ zu der Verpackungsmaschine in mindestens zwei, vorzugsweise drei Raumrichtungen definiert. Mit dem Transportmittel werden die Werkzeuge zu der Verpackungsmaschine hin und von dieser weg transportiert.

Diese bevorzugte Ausführungsform der vorliegenden Erfindung hat den Vorteil, dass ein Transportmittel in einer, relativ zu der Verpackungsmaschine, beispielsweise zu deren Rahmen und/oder der Störkante, eindeutigen Lage gebracht werden kann und in dieser Lage ein oder mehrere Werkzeuge aufgenommen und/oder übergeben werden können. Dieses Mittel wirkt mit einem Mittel zusammen, das an dem Transportmittel vorgesehen ist. Vorzugsweise sind die beiden Mittel selbstfindend ausgeführt. Beispielweise ist eines der Mittel ein Kegelstumpf und das andere Mittel ein sich verjüngende Ausnehmung, in die der Kegelstumpf eingeführt. Dadurch sind die beiden Mittel in mindestens zwei gegebenenfalls sogar drei Raumrichtungen eindeutig zueinander festgelegt und dieses System ist selbstfindend. Vorzugsweise erfolgt über diese beiden Mittel auch noch ein Energietransfer zu dem Transportmittel hin, mit dem das jeweilige Werkzeug motorisch bewegt werden kann.

Mit dem Transportmittel kann das/die Werkzeug(e), das durch das oben beschriebene Verfahren bzw. die oben beschriebene Verpackungsmaschine in einer ergonomisch günstigen Höhe übergeben wird, manuell oder motorisch an das Transportmittel übergeben, beispielsweise geschoben oder gezogen werden. Dabei sind folgende Alternativen denkbar:
a. Es gibt zwei getrennte Transportmittel: eines für die Werkzeugaufnahme und eines für die Werkzeugabgabe. Das zu wechselnde Werkzeug wird auf das Transportmittel geladen und dieses von der Verpackungsmaschine wegbewegt. Ein anderes Transportmittel wird an die Verpackungsmaschine angedockt und übergibt ein neues Werkzeug.
b. Das Transportmittel enthält bereits das Wechselwerkzeug, z.B in einer anderen Ebene und/oder in derselben Ebene jedoch versetzt. Nach der Aufnahme eines Werkzeuges von der Verpackungsmaschine wird das Wechselwerkzeug in die Übergabeposition gebracht und an die Verpackungsmaschine übergeben.
c. Das Transportmittel enthält alle zu wechselnden Werkzeuge einer oder mehrerer Arbeitsstationen der Verpackungsmaschine.

Das Transportmittel und/oder die Verpackungsmaschine weisen vorzugsweise ein Mittel auf, mit dem der seitliche Abstand zwischen dem Transportmittel und der Verpackungsmaschine überbrückt werden kann. Dabei kann es sich beispielsweise um teleskopierbare Stangen handeln und/oder um einen seitlich verschiebbaren Übergabetisch. Das Transportmittel kann auch durch eine Schwenk und/oder Drehbewegung den Abstand überbrücken.

Vorzugsweise ist auch das jeweilige Werkzeug und/oder das Transportmittel so vorgesehen, dass die Werkzeugaufnahme/-übergabe automatisch erfolgt. Das Werkzeug weist dafür eine Kennung auf, aufgrund derer das Transportmittel, zumindest die Werkzeugaufnahme und -übergabe, automatisch erfolgt. Der Transport des Transportmittels zu der Verpackungsmaschine hin und davon weg kann manuell oder motorisch oder automatisch erfolgen.

Im Folgenden werden die Erfindungen anhand der Figuren 1 bis 7 erläutert. Diese Erläuterungen sind lediglich beispielhaft und schränken den allgemeinen Erfindungsgedanken nicht ein. Diese Erläuterungen gelten für alle Gegenstände der vorliegenden Erfindungen gleichermaßen.
Figur 1 zeigt eine Verpackungsmaschine.
Figur 2 zeigt eine erste Ausführungsform des nicht erfindungsgemäßen Verfahrens.
Figur 3 zeigt eine weitere Ausführung des nicht erfindungsgemäßen Verfahrens.
Figur 4 zeigt eine dritte Ausführungsform des nicht erfindungsgemäßen Verfahrens.
Figur 5 zeigt noch eine weitere Ausführungsform des nicht erfindungsgemäßen Verfahrens.
Figur 6 zeigt die Verpackungsmaschine mit dem tragenden Oberteil im geschlossenen Zustand.
Figur 7 zeigt die Ausführungsform gemäß Figur 6 mit hochgeschwenktem schwenkbaren Teil, ohne dass das tragende Oberteil daran angedockt ist.

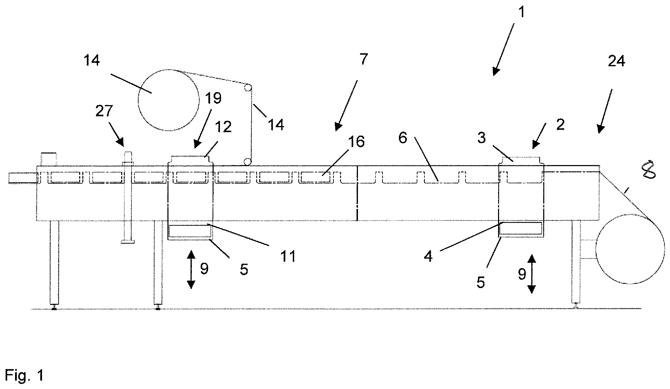

Figur 1 zeigt die erfindungsgemäße Verpackungsmaschine 1, die eine Tiefziehstation 2, eine Füllstation 7 sowie eine Siegelstation 19 aufweist. Eine Kunststofffolienbahn 8, die sogenannte Unterbahn, wird von einer Vorratsrolle abgezogen und, vorzugsweise taktweise, entlang der erfindungsgemäßen Verpackungsmaschine von rechts nach links transportiert. Bei einem Takt wird die Folienbahn um eine Formatlänge weitertransportiert. In der Anmeldung wird dies auch als "Vorschubs der Folienbahn bei einem Takt" bezeichnet. Dafür weist die Verpackungsmaschine zwei Transportmittel (nicht dargestellt), in dem vorliegenden Fall jeweils zwei Endlosketten auf, die rechts und links von der Folienbahn angeordnet sind. Jede Endloskette weist Haltemittel auf, die jeweils die Kanten der Folienbahn zusammenwirken. Sowohl am Anfang als auch am Ende der Verpackungsmaschine ist für jede Kette jeweils mindestens ein Zahnrad vorgesehen, um das die jeweilige Kette umgelenkt wird. Mindestens eines dieser Zahnräder ist angetrieben. Die Zahnräder im Eingangsbereich und/oder im Ausgangsbereich können miteinander, vorzugsweise durch eine starre Achse, verbunden sein. Jedes Transportmittel weist eine Vielzahl von Klemmmitteln auf, die die Unterfolie im Einlaufbereich klemmend ergreifen und die Bewegung des Transportmittels auf die Unterfolie übertragen. Im Auslaufbereich der Verpackungsmaschine wird die klemmende Verbindung zwischen dem Transportmittel und der Unterfolie wieder gelöst. In der Tiefziehstation 2, die über ein Oberwerkzeug 3 und ein Unterwerkzeug 4 verfügt, das die Form der herzustellenden Verpackungsmulde aufweist, werden die Verpackungsmulden 6 in die Folienbahn 8 eingeformt. Das Unterwerkzeug 4 ist auf einem Hubtisch 5 angeordnet, der, wie durch den Doppelpfeil symbolisiert wird, vertikal verstellbar ist. Vor jedem Folienvorschub wird das Unterwerkzeug 4 abgesenkt und danach wieder angehoben. Im weiteren Verlauf der Verpackungsmaschine werden die Verpackungsmulden dann in der Füllstation 7 mit dem Verpackungsgut 16 gefüllt. In der sich daran anschließenden Siegelstation 19, die ebenfalls aus einem Oberwerkzeug 12 und einem vertikal verstellbaren Unterwerkzeug 11 besteht, wird eine Oberfolie auf die Verpackungsmulde gesiegelt. Auch in der Siegelstation werden das Oberwerkzeug und/oder das Unterwerkzeug vor und nach jedem Folientransport abgesenkt bzw. angehoben. Auch die Oberfolie 14 kann in Transportmitteln geführt sein bzw. von Transportketten transportiert werden, wobei sich diese Transportmittel dann nur von der Siegelstation und ggf. stromabwärts erstrecken. Ansonsten gelten die Ausführungen, die zu den Transportmitteln der Unterfolie gemacht wurden. Im weiteren Verlauf der Verpackungsmaschine werden auch die fertiggestellten Verpackungen vereinzelt, was mit dem Schneidwerkzeug 27 erfolgt.

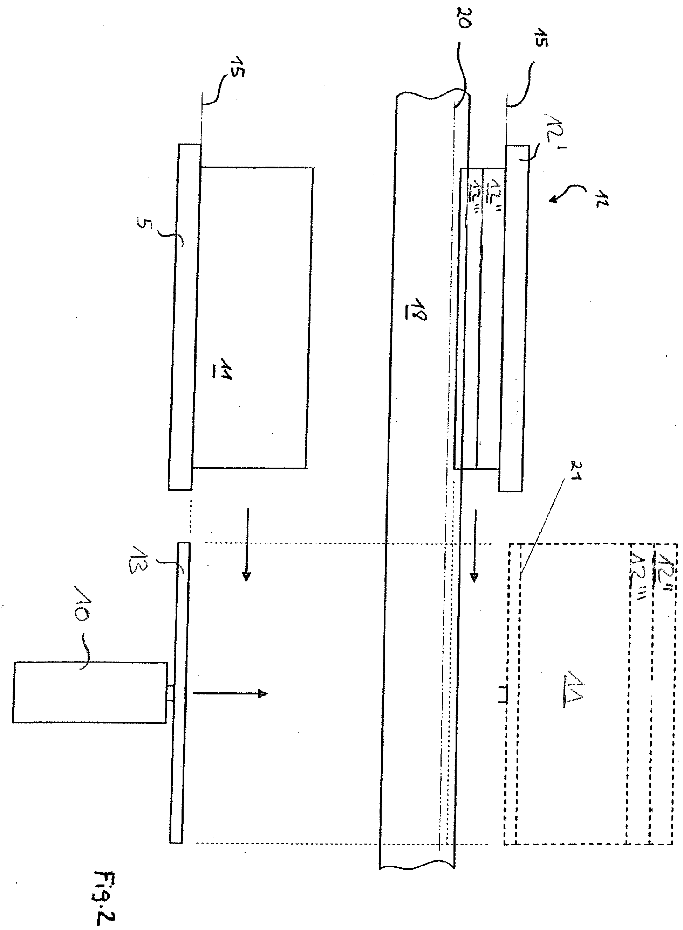

Figur 2 zeigt die Siegelstation der erfindungsgemäßen Verpackungsvorrichtung, wobei die folgenden Ausführungen gemäß Figur 2 bis 7 für die Tiefziehstation analog gelten. Zu sehen ist ein Maschinenrahmen 18 entlang dessen von rechts nach links oder von links nach rechts befüllte Verpackungen in einer Folienebene 20 transportiert werden, die in der Siegelstation mit einer Oberfolie verschlossen werden. Die Siegelstation weist ein Oberwerkzeug 12 und ein Unterwerkzeug 11 auf. Das Oberwerkzeug 12 besteht aus einem tragenden Oberteil 12' an dem ein Siegelrahmen 12" sowie ein Kammerdeckel 12''' angeordnet ist. Vorzugsweise ist der Siegelrahmen 12" relativ zu dem Kammerdeckel beweglich vorgesehen. Der Siegelrahmen 12" und der Kammerdeckel 12''' werden im Folgenden als Werkzeuge bezeichnet, die von dem tragenden Oberteil 12' entlang einer Trennebene 15 getrennt werden und somit ausgetauscht werden können. Unterhalb der Folienebene ist ein Siegelunterteil 11 vorgesehen, das beispielsweise eine Siegelbrille aufweist. Dieses Werkzeug 11 ist an einem Hubtisch 5, mit dem es auf und ab bewegbar ist, fixiert, kann jedoch von diesem auch entlang der Trennebene 15 getrennt und somit ausgetauscht werden. Für ein Werkzeugwechsel werden die zu wechselnden Werkzeuge 12", 12''' und 11 zunächst einmal in ihre Werkzeugwechselposition verbracht. Sodann werden die Werkzeuge 12", 12''' als Einheit von dem tragenden Oberteil 12' getrennt. Dies erfolgt manuell, vorzugsweise jedoch automatisch. Danach wird das Werkzeug 12", 12''' auf eine Aufnahmeeinheit, beispielsweise Schiebeleiste, verbracht, vorzugsweise abgesenkt, entweder durch freien Fall über eine kurze Entfernung oder automatisch geführt. Des Weiteren wird die Folie im Bereich oberhalb einer Hubeinrichtung 10 geöffnet, beispielsweise indem mit einem Messer ein Loch in die Folienbahn geschnitten wird, das so groß ist, dass das untere Werkzeug durch dieses Loch hindurchgeführt werden kann. Bereiche der Folie (seitliche Streifen) bleiben dabei unbeschädigt, so dass die Folie bereichsweise durchgängig bleibt und der Kraftfluss beim Transport der Folie nicht vollständig unterbrochen wird. Dadurch entfällt ein erneutes Einfädeln der Folie im anschließenden Prozessverlauf. Des Weiteren wird das untere Werkzeug 11 entweder manuell oder automatisch von dem Hubtisch 5 entriegelt. Sodann werden das untere Werkzeug 11 gegen oder in Laufrichtung der Maschine um mindestens eine Formatlänge entweder manuell oder automatisch verschoben, wobei das Werkzeug 11 auf ein Übernahmesystem übergeben wird, das Bestandteil der bestehenden Hubeinrichtung sein kann, jedoch auch eine separate Hubeinrichtung 10 darstellen kann. Auch das obere Werkzeug 12", 12''' wird in oder gegen die Laufrichtung der Maschine verschoben, wobei die Werkzeuge 12", 12''' sowie 11 vorzugsweise in dieselbe Richtung verschoben werden. Auch dieses Werkzeug 12", 12''' wird um mindestens eine Formatlänge der Folie entweder manuell oder automatisch verschoben und das Werkzeug 12", 12''' auf ein Übernahmesystem vorzugsweise dasselbe Übernahmesystem wie das Unterwerkzeug 11 übergeben. Vorzugsweise bewegungskombiniert werden sodann das untere Werkzeug 11 sowie das obere Werkzeug 12", 12''' über die Störkante, das heißt mindestens über den Maschinenrahmen 18 der Verpackungsmaschine, angehoben und können von dort in einer ergonomischen Höhe von Hand oder von einem Maschinensystem übernommen werden.

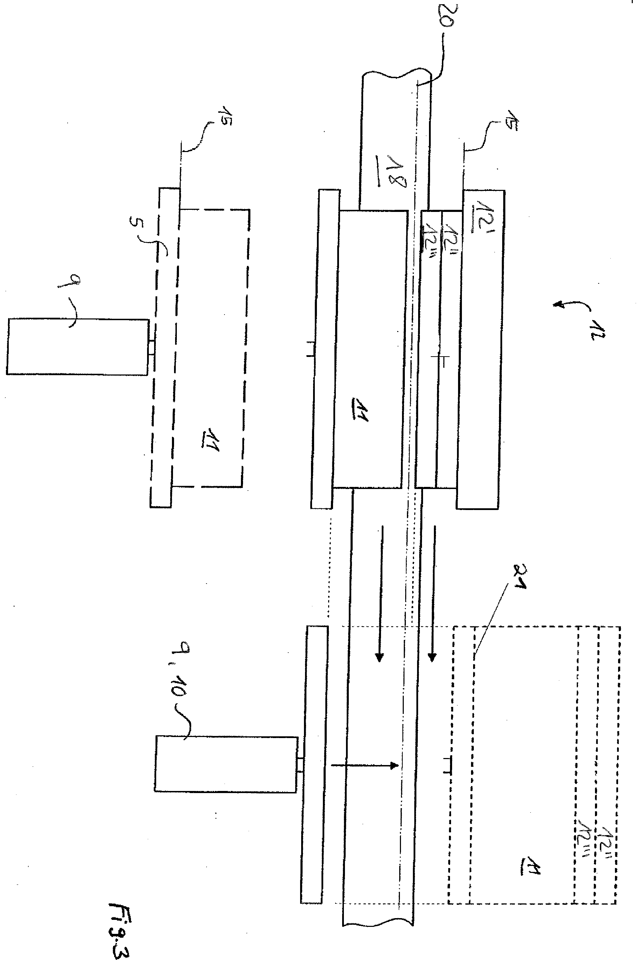

Figur 3 zeigt eine weitere Ausführungsform des erfindungsgemäßen Verfahrens. Die Ausführungen zu den Figuren 1 und 2 gelten für das Verfahren gemäß Figur 3 gleichermaßen, wobei in dem vorliegenden Fall die beiden Werkzeuge gemeinsam von der Hubeinrichtung 10 angehoben werden. Die Hubeinrichtung kann die ohnehin vorhandene Hubeinrichtung oder eine zusätzliche Hubeinrichtung sein. Sofern Produktunterstützungen (nicht dargestellt) vorhanden sind, müssen diese entfernt oder in die zusätzliche Hubeinrichtung 10 integriert werden. Vor dem gemeinsamen Anheben mit der Hubeinrichtung 10 kann das Unterwerkzeug 11 in eine, in diesem Fall erhöhte Werkzeugwechselposition nahe unter der Unterfolie mit der zumeist vorhandenen Hubeinrichtung 9 verbracht werden, um beispielsweise die Hubeinrichtung 10, durch die erhöhte Angriffsposition mit einem geringeren Hubmaß ausstatten zu können, wodurch beispielsweise der Bauraum reduziert und Material eingespart werden können.

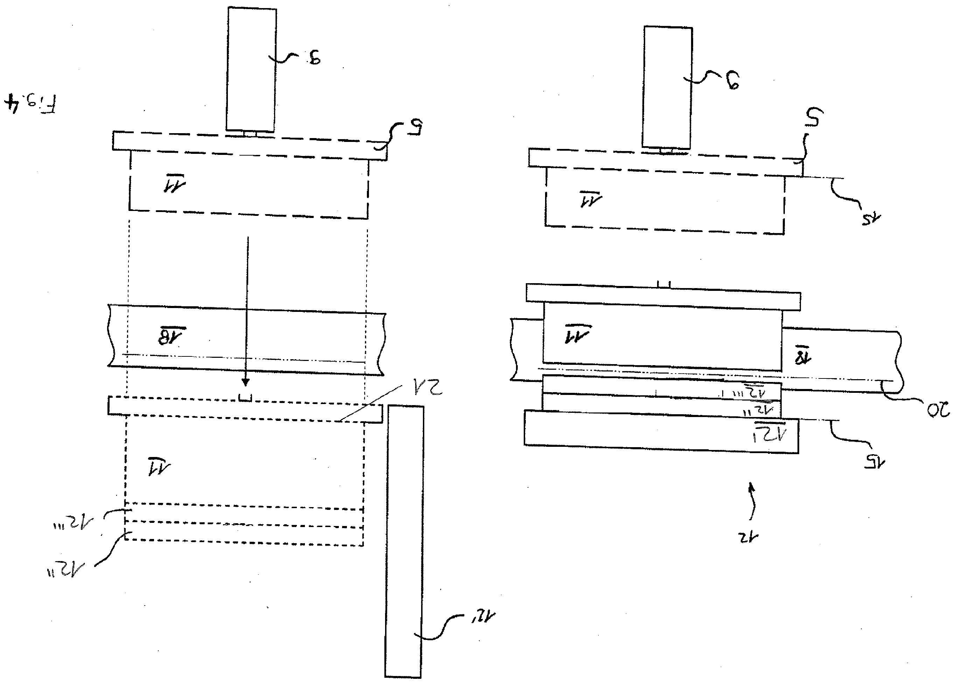

Figur 4 zeigt eine weitere Variante des erfindungsgemäßen Verfahrens. Auch bei dieser Variante wird auf die vorherigen Verfahrensbeschreibungen gemäß Figuren 1 - 3 Bezug genommen. Diese Variante weist als Besonderheit auf, dass die Hubeinrichtung 9, die für die Auf und Ab-Bewegung beim Siegeln der Folie benötigt wird, auch zum Werkzeugwechsel eingesetzt wird. Mit dieser Hubeinrichtung 9 wird mindestens das Unterwerkzeug 11 vorzugsweise jedoch das Unterwerkzeug 11 und das Oberwerkzeug 12", 12''' gemeinsam über die Störkante 21 hinaus angehoben. Des Weiteren weist diese Ausführungsform der erfindungsgemäßen Vorrichtung bzw. des erfindungsgemäßen Verfahrens ein schwenkbares, tragendes Oberteil 12' auf, das von einer im Wesentlichen horizontalen in eine im Wesentlichen vertikale Ausrichtung verschwenkbar ist. Dadurch ist der Bereich oberhalb des Werkzeugs 12" bzw. 12''' vollständig frei. Alternativ kann das tragende Oberteil 12' zusätzlich oder ausschließlich seitlich verschoben werden, um den Bereich oberhalb des Werkzeugs 12" und 12''' freizugeben.

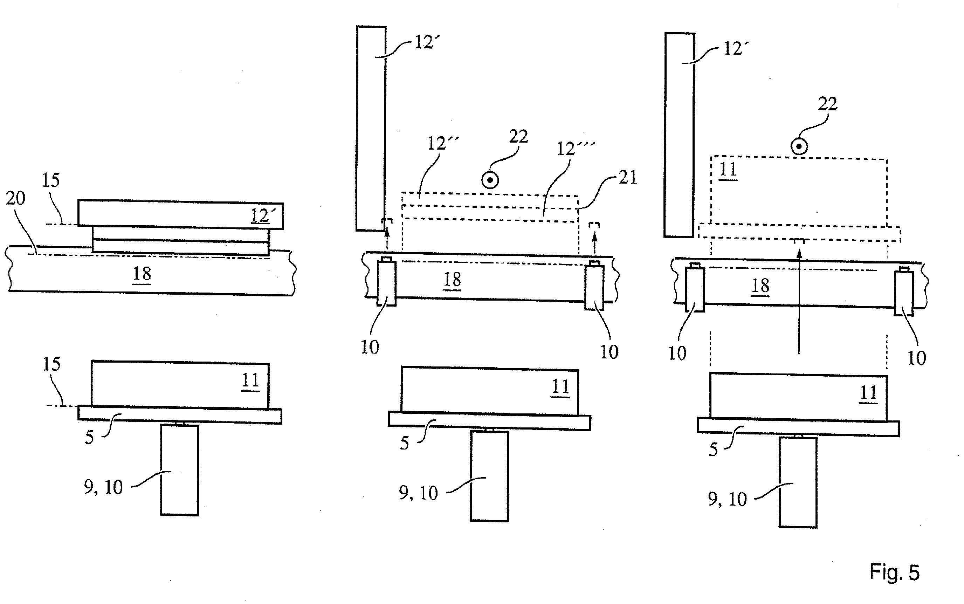

Figur 5 zeigt noch eine weitere Ausführungsform des erfindungsgemäßen Verfahrens, wobei auch hier auf die Beschreibung gemäß den voranstehenden Figuren Bezug genommen wird. Auch bei dieser Version ist das tragende Oberteil 12' für einen Werkzeugwechsel von einer horizontalen in eine vertikale Position überführbar und/oder seitlich verschiebbar. Bei dieser Variante wird zunächst das Oberwerkzeug 12", 12''' angehoben und horizontal, wie durch den Pfeil 22 symbolisiert, von der Maschine, durch eine horizontale Bewegung etwa quer zur Transportrichtung der Folie, entnommen. Sodann wird das untere Werkzeug 11 über eine Störkante 21 angehoben und kann ebenfalls, wie durch den Pfeil 22 symbolisiert, horizontal nach vorne verschoben werden. Für die Bewegung des Oberwerkzeuges 12", 12''' weist die erfindungsgemäße Verpackungsmaschine zwei zusätzliche Hubeinrichtungen 10 auf. Die Bewegung des Unterwerkzeugs 11 kann entweder mit der sowieso vorhandenen Hubeinrichtung 9 oder mit einer zusätzlichen Hubeinrichtung 10 erfolgen.

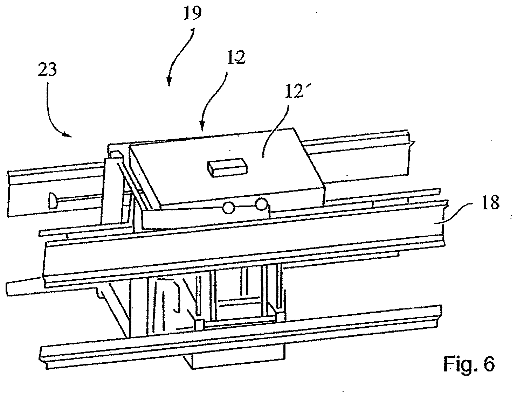

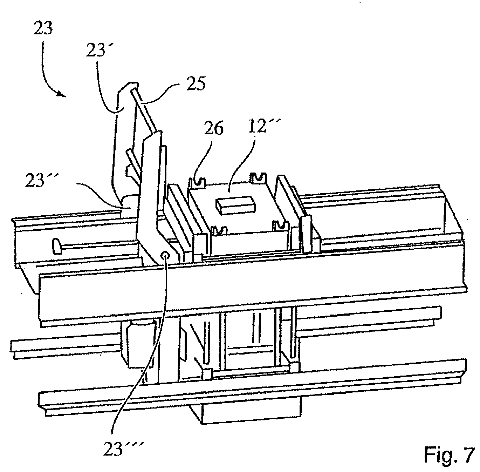

Figur 6 zeigt eine Ausführungsform der erfindungsgemäßen Verpackungsmaschine, bei der das tragende Oberteil 12' mit einem Schwenkmechanismus 23 von einer horizontalen in eine vertikale Stellung überführt werden kann. Wie insbesondere Figur 7 entnommen werden kann, weist der Schwenkmechanismus 23 ein schwenkbares Teil 23', ein stationär an den Maschinenrahmen 18 vorgesehenes Teil 23" sowie ein Drehgelenk 23''' auf. Das schwenkbare Teil 23' weist Verbindungsmittel 25 hier Stangen auf, die lösbar mit dem tragenden Oberteil 12' verbindbar sind. Ebenso weist das tragende Oberteil 12" Verbindungsmittel 26 auf, die das Ankoppeln des schwenkbaren Teils 23'an deren Verbindungsmittel 25 ermöglichen.

In Figur 7 ist das schwenkbare Teil 23' hochgeschwenkt dargestellt, ohne dass das tragende Oberteil 12' angekoppelt ist. Wäre das tragende Oberteil 12' hingegen angekoppelt, dann würde es mit hochgeschwenkt und somit der Bereich oberhalb des Werkzeugs 12" bzw. 12''' frei zugänglich. Die zusätzliche oder ausschließliche Ausführung, in der das tragende Oberteil seitlich weggeschoben werden kann, um den Bereich oberhalb des Werkzeugs 12" bzw. 12''' frei zugänglich zu machen, ist nicht bildlich dargestellt.

### Bezugszeichenliste:

- 1: Verpackungsmaschine
- 2: Tiefziehstation
- 3: Oberwerkzeug der Tiefziehstation
- 4: Unterwerkzeug der Tiefziehstation
- 5: Hubtisch, Träger der Siegel- und/oder Tiefziehstation, Grundplatte auf dem das Unterwerkzeug befestigt ist
- 6: Verpackungsmulde
- 7: Füllstation
- 8: Unterfolienbahn
- 9: Hubeinrichtung für die Verpackungsherstellung und/oder den Werkzeugwechsel
- 10: Hubeinrichtung für den Werkzeugwechsel
- 11: Unterwerkzeug der Siegelstation
- 12: Oberwerkzeug der Siegelstation
- 12': tragendes Oberteil, tragendes Siegeloberteil
- 12": weiteres Oberteil, Siegelahmen
- 12"': weiteres Oberteil, Kammerdeckel
- 13: Hubtisch, Träger des Werkzeugwechselsystems
- 14: Oberfolie
- 15: Trennebene
- 16: Verpackungsgut
- 17: Steuerelement, Steuerrolle
- 18: Maschinenrahmen
- 19: Siegelstation
- 20: Folienebene
- 21: untere Störkante
- 22: horizontal
- 23: Schwenk-, Drehmechanismus
- 23': schwenkbares Teil
- 23": feststehendes Teil
- 23"': Drehgelenk
- 24: Einlaufbereich
- 25: Verbindungsmittel
- 26: Verbindungsmittel
- 27: Schneideinrichtung

## Patentansprüche

1. Verpackungsmaschine (1) mit einer Tiefzieh- (2), Füll- (7) und/oder Siegelstation (19), wobei die Tiefzieh- und/oder die Siegelstation ein Oberwerkzeug (3, 12) mit jeweils einem tragenden Oberteil (12') aufweisen, **dadurch gekennzeichnet, dass** mindestens ein tragendes Oberteil schwenkbar vorgesehen ist und der Schwenkmechanismus (23) von dem tragenden Oberteil (12') lösbar vorgesehen ist.

2. Verpackungsmaschine nach Anspruch 1, **dadurch gekennzeichnet, dass** mindestens ein tragendes Oberteil für den Werkzeugwechsel von dem Werkzeug (3, 12", 12''') wegbewegbar, insbesondere seitlich längs- oder quer zur Folientransportrichtung insbesondere translatorisch bewegbar vorgesehen ist, wobei das bewegen manuell motorisch und/oder automatisch vorgesehen ist.

3. Verpackungsmaschine nach einem der voranstehenden Ansprüche, **dadurch gekennzeichnet, dass** die Tiefzieh- und/oder Siegelstation jeweils eine Hubeinrichtung (9) aufweist und dass diese auch zum Anheben und Absenken des Unter- (4, 11) und/oder Oberwerkzeugs (3, 12", 12''') vorgesehen ist.

4. Verpackungsmaschine nach einem der voranstehenden Ansprüche, **dadurch gekennzeichnet, dass** sie höhenverstellbare, vorzugsweise in horizontale Richtung teleskopierbare Führungsschienen aufweist.

5. Verpackungsmaschine nach einem der voranstehenden Ansprüche, **dadurch gekennzeichnet, dass** sie mehrere Form- und/oder Siegelstationen aufweist, wobei die Formstationen und/oder Siegelstationen vorzugsweise jeweils unterschiedliche Werkzeuge aufweisen.

6. Verpackungsmaschine nach einem der voranstehenden Ansprüche, **dadurch gekennzeichnet, dass** sie eine Produktunterstützung aufweist, die höhenverstellbar vorgesehen ist und/oder Teil einer Hubeinrichtung (10) für den Werkzeugwechsel ist.

7. Verpackungsmaschine nach einem der voranstehenden Ansprüche, **dadurch gekennzeichnet, dass** das Schwenkmittel nicht in das tragende Oberteil (12') integriert ist, sondern vorzugsweise eine separate, andockbare Baugruppe darstellt.

8. Verpackungsmaschine nach einem der voranstehenden Ansprüche, **dadurch gekennzeichnet, dass** sie ein Mittel aufweist, das in Eingriff mit einem korrespondierenden Mittels an einem Transportmittel bringbar ist und das die Lage des Transportmittels relativ zu der Verpackungsmaschine in mindestens zwei, vorzugsweise drei Raumrichtungen definiert.

9. Verpackungsmaschine nach Anspruch 8, **dadurch gekennzeichnet, dass** das Transportmittel Aufnahmen für ein Werkzeug ((3, 4, 11, 12", 12''') und gegebenenfalls Aufnahmen für das Wechselwerkzeug für eine oder mehrere Stationen aufweist.

10. Verpackungsmaschine nach einem der Ansprüche 8 oder 9, **dadurch gekennzeichnet, dass** sie eine Energieversorgung für das Transportmittel aufweist.

## Claims

1. Packaging machine (1) having a vacuum-forming (2), filling (7) and/or sealing station (19), wherein the vacuum-forming station and/or the sealing station have/has an upper tool (3, 12) having in each case one supporting upper part (12'), **characterized in that** at least one supporting upper part is provided so as to be pivotable and the pivoting mechanism (23) is provided so as to be releasable from the supporting upper part (12').

2. Packaging machine according to Claim 1, **characterized in that** at least one supporting upper part for the tool change is provided so as to be capable of being moved away from the tool (3, 12", 12'''), in particular capable of being moved laterally in a manner longitudinally or transverse to the film transportation direction, in particular in a translatory manner, wherein the motion is provided so as to be manual, motor driven, and/or automatic.

3. Packaging machine according to one of the preceding claims, **characterized in that** the vacuum-forming station and/or the sealing station have/has in each case a lifting device (9), and **in that** said lifting station (9) is also provided for lifting and lowering the lower tool (4, 11) and/or the upper tool (3, 12", 12''').

4. Packaging machine according to one of the preceding claims, **characterized in that** said packaging machine has height-adjustable guide rails which are preferably telescopic in the horizontal direction.

5. Packaging machine according to one of the preceding claims, **characterized in that** said packaging machine has a plurality of forming stations and/or sealing stations, wherein the forming stations and/or the sealing stations in each case preferably have dissimilar tools.

6. Packaging machine according to one of the preceding claims, **characterized in that** said packaging machine has a product support which is provided so as to be height-adjustable and/or is part of a lifting installation (10) for the tool change.

7. Packaging machine according to one of the preceding claims, **characterized in that** the pivoting means is not integrated in the supporting upper part (12') but rather represents a separate docking-capable functional group.

8. Packaging machine according to one of the preceding claims, **characterized in that** said packaging machine has a means which is capable of engaging with a corresponding means on a transportation means, and which defines the position of the transportation means relative to the packaging machine in at least two, preferably three spatial directions.

9. Packaging machine according to Claim 8, **characterized in that** the transportation means has receptacles for a tool (3, 4, 11, 12", 12"') and optionally receptacles for the replacement tool for one or a plurality of stations.

10. Packaging machine according to either of Claims 8 and 9, **characterized in that** said packaging machine has an energy supply for the transportation means.

## Revendications

1. Machine d'emballage (1) comprenant un poste d'emboutissage profond (2), de remplissage (7) et/ou de scellage (19), le poste d'emboutissage profond et/ou le poste de scellage présentant un outil supérieur (3, 12) avec une partie supérieure porteuse respective (12'), **caractérisée en ce qu'**au moins une partie supérieure porteuse est prévue de manière pivotante et le mécanisme de pivotement (23) est prévu de manière à pouvoir être détaché de la partie supérieure porteuse (12').

2. Machine d'emballage selon la revendication 1, **caractérisée en ce qu'**au moins une partie supérieure porteuse peut être enlevée de l'outil (3, 12'', 12''') pour le changement d'outil, en particulier peut être déplacée latéralement longitudinalement ou transversalement à la direction de transport de feuilles, en particulier en translation, le déplacement étant réalisé manuellement par moteur et/ou automatiquement.

3. Machine d'emballage selon l'une quelconque des revendications précédentes, **caractérisée en ce que** le poste d'emboutissage profond et/ou de scellage présentent à chaque fois un dispositif de levage (9) et **en ce que** celui-ci est également prévu pour soulever et abaisser l'outil inférieur (4, 11) et/ou l'outil supérieur (3, 12'', 12''').

4. Machine d'emballage selon l'une quelconque des revendications précédentes, **caractérisée en ce qu'**elle présente des rails de guidage réglables en hauteur, de préférence pouvant être télescopés dans la direction horizontale.

5. Machine d'emballage selon l'une quelconque des revendications précédentes, **caractérisée en ce qu'**elle présente plusieurs postes de formage et/ou de scellage, les postes de formage et/ou les postes de scellage présentant de préférence à chaque fois des outils différents.

6. Machine d'emballage selon l'une quelconque des revendications précédentes, **caractérisée en ce qu'**elle présente un support de produit qui est prévu de manière réglable en hauteur et/ou qui fait partie d'un dispositif de levage (10) pour le changement d'outil.

7. Machine d'emballage selon l'une quelconque des revendications précédentes, **caractérisée en ce que** le moyen de pivotement n'est pas intégré dans la partie supérieure porteuse (12') mais constitue de préférence un module séparé arrimable.

8. Machine d'emballage selon l'une quelconque des revendications précédentes, **caractérisée en ce qu'**elle présente un moyen qui peut être amené en prise avec un moyen correspondant au niveau d'un moyen de transport et qui définit la position du moyen de transport par rapport à la machine d'emballage dans au moins deux, de préférence trois, directions spatiales.

9. Machine d'emballage selon la revendication 8, **caractérisée en ce que** le moyen de transport présente des logements pour un outil (3, 4, 11, 12", 12''') et éventuellement des logements pour l'outil de changement pour un ou plusieurs postes.

10. Machine d'emballage selon l'une quelconque des revendications 8 ou 9, **caractérisée en ce qu'**elle présente une alimentation en puissance pour le moyen de transport.
